# EUROPEAN PATENT APPLICATION

(11) **EP 2 051 228 A1**
(43) Date of publication of application: **22.04.2009**
(21) Application number: 07767361.4
(22) Date of filing: 21.06.2007
(51) Int. Cl.: G09F 9/30, G02F 1/1345, G09F 9/00

(54) **DISPLAY DEVICE**

(30) Priority: 27.07.2006 JP 2006205211
(71) Applicant: Sharp Kabushiki Kaisha, Osaka-shi, Osaka 545-8522 (JP)
(72) Inventor: TANAKA, Shinya, Matsusaka-shi, Mie 515-0044 (JP); IMAI, Hajime, Matsusaka-shi, Mie 515-0011 (JP); TSUKAMURA, Chikanori, Tsu-shi, Mie 514-0103 (JP); KATAOKA, Yoshiharu, Tsu-shi, Mie 514-0822 (JP)
(74) Representative: Müller - Hoffmann & Partner
(86) International application number: PCT/JP2007/062535
(87) International publication number: WO 2008/013014

(57) **Abstract**

In a display device **(100)** according to the present invention, a first glass substrate **(210)** is curved. When signal line driving elements **(260)** and scanning line driving elements **(270)** are viewed from a normal direction of a principal face **(213)** of the first glass substrate **(210),** the signal line driving elements **(260)** and the scanning line driving elements **(270)** each have a rectangular shape with two longer sides **(261, 262, 271, 272)** and two shorter sides **(263, 264, 273, 274).** The signal line driving elements **(260)** and the scanning line driving elements **(270)** are mounted so that the longer sides **(261, 262, 271, 272)** thereof are parallel to one another.

## Description

### TECHNICAL FIELD

The present invention relates to a display device, and more particularly to a display device having a curved shape.

### BACKGROUND ART

Generic display devices have substantially planar or rectangular solid shapes. However, in a display device having such a shape, external light in the surroundings may be reflected by a glass substrate, so that the surrounding landscapes may appear as reflection glares overlaid on a video on the display device, thus causing a misperception of the video. Therefore, adopting a curved shape for the display device is known to suppress reflection glares. In a display device of a curved shape, the glass substrate is curved in a predetermined shape (see, for example, Patent Document 1).
[Patent Document 1] Japanese Laid-Open Patent Publication No. 11-38395

### DISCLOSURE OF INVENTION

### PROBLEMS TO BE SOLVED BY THE INVENTION

Generally speaking, an active matrix substrate that is used for a display device such as a liquid crystal display device includes a plurality of semiconductor chips (driving elements) which are mounted in a terminal region of a glass substrate. The semiconductor chips generate data signals and gate signals which are generated based on input signals, and supply these signals to signal lines and scanning lines. In the following descriptions of the present specification, a semiconductor chip which supplies a data signal to a signal line will be referred to as a signal line driving element, whereas a semiconductor chip which supplies a gate signal to a scanning line will be referred to as a scanning line driving element.

The inventors have found that, when signal line driving elements and scanning line driving elements are simply mounted on a curved glass substrate, the signal line driving elements and scanning line driving elements may become detached from the glass substrate due to a load which emanates from bending stress.

The present invention has been made in view of the above problems, and an objective thereof is, in a display device having a curved shape, to restrain once-mounted signal line driving elements and scanning line driving elements from being detached from a glass substrate.

### MEANS FOR SOLVING THE PROBLEMS

A display device is a display device comprising an active matrix substrate and a display medium layer disposed on a principal face of the active matrix substrate, wherein, the active matrix substrate includes: a glass substrate having a principal face which includes a displaying region and a terminal region, a plurality of circuit elements provided in the displaying region of the glass substrate, a plurality of signal lines and a plurality of scanning lines connected to the plurality of circuit elements, at least one signal line driving element mounted in the terminal region of the glass substrate for supplying a data signal to the plurality of signal lines, and at least one scanning line driving element mounted in the terminal region of the glass substrate for supplying a gate signal to the plurality of scanning lines; the glass substrate is curved; and when the at least one signal line driving element and the at least one scanning line driving element are each viewed from a normal direction of the principal face of the glass substrate, the at least one signal line driving element and the at least one scanning line driving element each have a rectangular shape with two longer sides and two shorter sides, the at least one signal line driving element and the at least one scanning line driving element each being mounted so that the longer sides thereof are parallel to one another.

In one embodiment, the glass substrate is curved in a direction which is perpendicular to each longer side of the at least one signal line driving element.

In one embodiment, the longer sides of the at least one signal line driving element are parallel or perpendicular to a direction in which the plurality of signal lines extend.

In one embodiment, the principal face of the glass substrate is curved in a concave shape.

In one embodiment, the principal face of the glass substrate is curved in a convex shape.

In one embodiment, the at least one signal line driving element and the at least one scanning line driving element are each mounted via an anisotropic electrically-conductive layer.

In one embodiment, the active matrix substrate further includes a plurality of substrate lines provided in the terminal region of the glass substrate; input bumps and output bumps are provided on the at least one signal line driving element; and the plurality of substrate lines include a plurality of input substrate lines electrically connected to the input bumps of the at least one signal line driving element and a plurality of output substrate lines electrically connected to the plurality of signal lines and the output bumps of the at least one signal line driving element, the output substrate line or lines corresponding to the at least one signal line driving element being disposed so as to be closer to the displaying region than are the input substrate lines.

In one embodiment, the display device further comprises a counter substrate opposing the active matrix substrate via the display medium layer, wherein, the display medium layer is a liquid crystal layer.

In one embodiment, the display device further comprises a circuit for receiving a television broadcast.

In an automotive vehicle according to the present invention, the aforementioned display device is used as an instrument panel.

### EFFECTS OF THE INVENTION

According to the present invention, in a display device having a curved shape, once-mounted signal line driving elements and scanning line driving elements can be restrained from being detached from a glass substrate.

### BRIEF DESCRIPTION OF DRAWINGS

[FIG. **1**] **(a)** is a schematic cross-sectional view of a display device according to the present embodiment, where: **(b)** is a schematic side view of the display device of the present embodiment; and **(c)** is a schematic plan view of the display device of the present embodiment.
[FIG. **2**] A schematic plan view of a display device of a comparative example.
[FIG. **3**] A schematic plan view of a signal line driving element in the display device of the present embodiment.
[FIG. **4**] A diagram showing an example where the display device of the present embodiment is used for an instrument panel.
[FIG. **5**] A schematic plan view showing another variant of the display device of the present embodiment.
[FIG. **6**] A schematic plan view showing still another variant of the display device of the present embodiment.
[FIG. **7**] **(a)** is a schematic side view of still another display device of the present embodiment, and **(b)** is a schematic plan view of the display device shown in **(a)**.

### DESCRIPTION OF THE REFERENCE NUMERALS

- **100**: display device
- **200**: active matrix substrate
- **210**: first glass substrate
- **211**: displaying region
- **212**: terminal region
- **213**: principal face
- **220**: circuit element
- **230**: first line
- **240**: second line
- **250**: substrate line
- **252**: first input substrate line
- **254**: first output substrate line
- **256**: second input substrate line
- **258**: second output substrate line
- **260**: signal line driving elements
- **261, 262**: longer side of signal line driving element
- **263, 264**: shorter side of signal line driving element
- **270**: scanning line driving element
- **271, 272**: longer side of scanning line driving element
- **273, 274**: shorter side of scanning line driving element
- **280**: input substrate
- **281**: terminal
- **300**: counter substrate
- **310**: second glass substrate
- **311**: principal face
- **350**: display medium layer

### BEST MODE FOR CARRYING OUT THE INVENTION

Hereinafter, an embodiment of a display device according to the present invention will be described with reference to the drawings. Herein, a liquid crystal display device will be illustrated as an example of a display device.

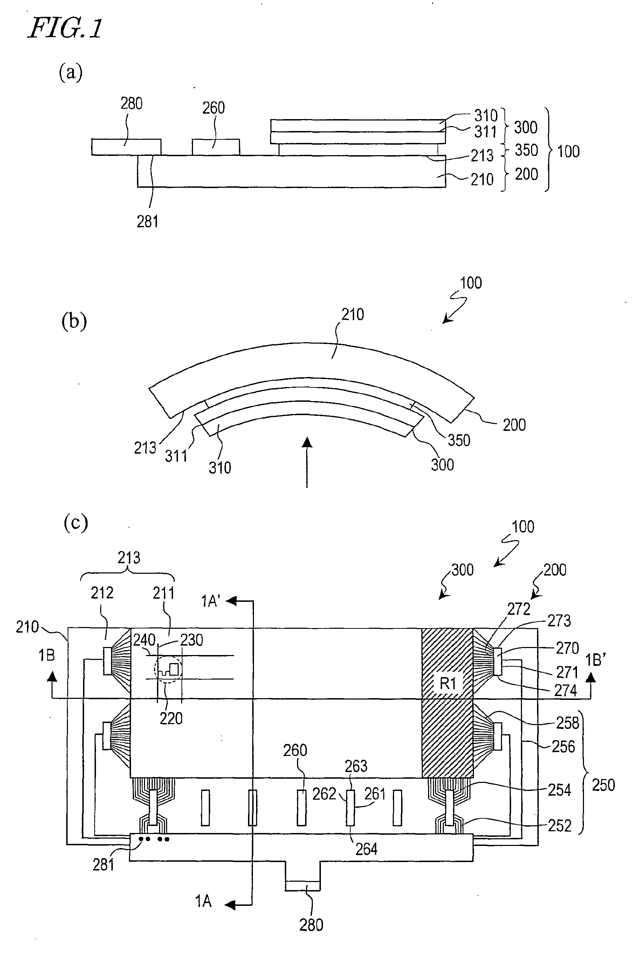

As shown in FIG. **1(a)**, the display device **100** of the present embodiment includes an active matrix substrate **200,** a counter substrate **300,** and a display medium layer **350** interposed between the active matrix substrate **200** and the counter substrate **300**. As shown in FIG. **1(b)****,** the display device **100** of the present embodiment has a curved shape. Herein, the display device **100** is a liquid crystal display device, and the display medium layer **350** is a liquid crystal layer. In this case, an image is displayed when each pixel modulates the light which is emitted from a backlight (not shown).

As shown in FIG. **1(c)****,** the active matrix substrate **200** includes: a glass substrate **210** having a principal face **213** which includes a displaying region **211** and a terminal region **212;** a plurality of circuit elements **220** provided in the displaying region **211** of the glass substrate **210;** a plurality of signal lines **230** and a plurality of scanning lines 2**40** connected to the plurality of circuit elements **220;** signal line driving elements **260** for supplying data signals to the signal lines **230;** and scanning line driving elements **270** for supplying gate signals to the scanning lines **240.** The signal line driving elements **260** and the scanning line driving elements **270** are bare chips, for example. The signal line driving elements **260** and the scanning line driving elements **270** are mounted in the terminal region **212** of the glass substrate **210.** Moreover, an input substrate **280** having a plurality of terminals **281** is attached in the terminal region **212** of the glass substrate **210.**

FIG. **1(a)** corresponds to a cross section along line **1A-1A'** in FIG. **1(c)****.** As shown in FIG. **1(a)****,** the counter substrate **300** includes a glass substrate **310.** The area of the principal face **213** of the glass substrate **210** is greater than that of the principal face **311** of the glass substrate **310,** and the glass substrate **310** is disposed so as to overlap the glass substrate **210.** Note that, in the following descriptions of the present specification, the glass substrate **210** of the active matrix substrate **200** may be referred to as a "first glass substrate", whereas the glass substrate **310** of the counter substrate **300** may be referred to as a "second glass substrate".

FIG. **1(b)** corresponds to a cross section along line **1B-1B'** in FIG. **1(c)****.** The arrow shown in FIG. **1(b)** indicates a direction in which a viewer of the display device **100** watches the display surface. The first glass substrate **210** and the second glass substrate **310** are curved with respect to a bending axis which is parallel to the signal lines **230,** in a direction that the scanning lines **240** extend, i.e., the lateral direction. As shown in FIG. **1(b)****,** the principal face **213** of the first glass substrate **210** is curved in a concave shape, whereas the principal face **311** of the second glass substrate **310** is curved in a convex shape, such that the principal face **311** of the second glass substrate **310** is parallel to the principal face **213** of the first glass substrate **210.** For example, the first glass substrate **210** has an outer size of 383.8 mm*122 mm; the second glass substrate **310** has an outer size of 373.8 mm*116.5 mm; and the first and second glass substrates **210** and **310** have a thickness of 0.25 mm. Moreover, radii of curvature of the first and second glass substrates **210** and **310** are 600R to 1500R (600 mm to 1500 mm), for example; herein, radii of curvature of the first and second glass substrates **210** and **310** are 1000R.

In the displaying region **211,** the signal lines **230** and the scanning lines **240** are disposed so that they cross each other perpendicularly. FIG. **1(c)** shows two signal lines **230** and two scanning lines **240** as an exemplification. Each circuit element **220** has a pixel electrode and a thin film transistor. Moreover, the signal line driving elements **260** and the scanning line driving elements **270** are mounted on the glass substrate **210** via an anisotropic electrically-conductive layer (not shown). The anisotropic electrically-conductive layer is formed by using an anisotropic electrically-conductive film (ACF), anisotropic electrically-conductive paste (ACP), or the like.

When each signal line driving element **260** is viewed from the normal direction of the principal face **213** of the first glass substrate **210,** the signal line driving element **260** has a rectangular shape with two longer sides **261, 262** and two shorter sides **263, 264.** Moreover, when each scanning line driving element **270** is viewed from the normal direction of the principal face **213** of the first glass substrate **210,** the scanning line driving element **270** has a rectangular shape with two longer sides **271, 272** and two shorter sides **273, 274.** The signal line driving elements **260** and the scanning line driving elements **270** are mounted on the first glass substrate **210** so that the longer sides **261, 262, 271, 272** are parallel to one another.

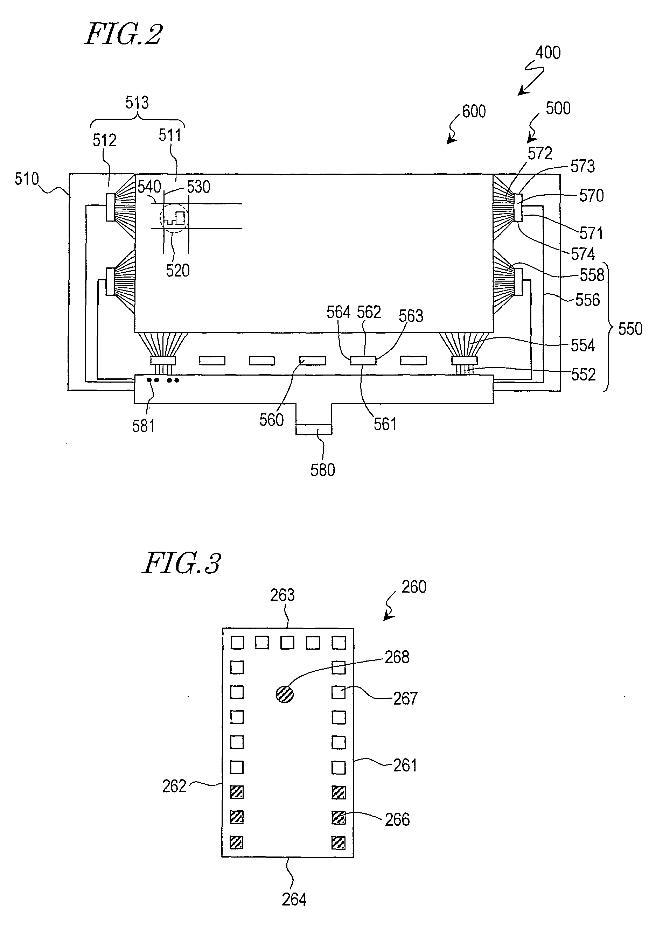

Hereinafter, the construction of the display device 100 of the present embodiment will be described in comparison with that of the display device **400** of a comparative example. First, referring to FIG. **2****,** the construction of the display device **400** of the comparative example will be described.

A first glass substrate **510** and a second glass substrate are curved also in the display device **400** of the comparative example, as in the display device **100** of the present embodiment. However, the display device **400** of the comparative example differs from the display device **100** of the present embodiment in that longer sides **561, 562** of each signal line driving element **560** are parallel to scanning lines **540.** In the following descriptions of the present specification, when a signal line driving element **560** is disposed so that the longer sides **561, 562** of the signal line driving element **560** are parallel to the scanning lines **540,** as in the display device **400** of the comparative example, the signal line driving element may be referred to as being laterally positioned. On the other hand, as in the display device **100** of the present embodiment, when a signal line driving element **260** is disposed so that the longer sides **261, 262** of the signal line driving element **260** are perpendicular to the scanning lines **240** (i.e., parallel to the signal lines **230),** the signal line driving element may be referred to as being vertically positioned.

In the display device **400** of the comparative example, the signal line driving elements **560** are laterally positioned on the first glass substrate **510** which is curved in the lateral direction. Therefore, due to a bending stress, a load acts along the longer sides **561, 562** of the signal line driving elements **560** so as to detach it from the first glass substrate **510.** In particular, a strong load acts on those signal line driving elements **560** which are at both ends of the row of signal line driving elements **560.** If the signal line driving elements **560** are detached from a principal face **513** of the first glass substrate **510,** the connections between the signal line driving elements **560** and input substrate lines **552** and output substrate lines **554** will become insufficient.

On the other hand, in the display device **100** of the present embodiment, as shown in FIG. **1(b)** and FIG. **1(c)****,** the signal line driving elements **260** are vertically positioned on the first glass substrate **210** which is curved in the lateral direction. In this case, even if the first glass substrate **210** is curved, the signal line driving elements **260** are unlikely to be detached from the first glass substrate **210,** and the electrical connection of the signal line driving elements **260** is ensured.

Thus, in the display device **100** of the present embodiment, since the signal line driving elements **260** are vertically positioned, the electrical connection of the signal line driving elements **260** is ensured even if the first glass substrate **210** is curved in the lateral direction. Moreover, in the display device **100** of the present embodiment, the longer sides **271, 272** of the scanning line driving elements **270** are also disposed parallel to the longer sides **261, 262** of the signal line driving elements **260,** and thus the electrical connection of the scanning line driving elements **270** is ensured for a reason similar to that for the signal line driving elements **260.**

Hereinafter, the construction of the signal line driving elements **260** in the display device **100** will be described. FIG. **3** shows a signal line driving element **260** as viewed from the normal direction of the principal face **213** of the first glass substrate **210.** The signal line driving element **260** has a rectangular shape having two longer sides **261, 262** and two shorter sides **263, 264,** such that the ratio between the shorter sides **263, 264** and the longer sides **261, 262** is approximately 1:10, for example. Note that the scanning line driving elements **270** also have a similar construction to that of the signal line driving elements **260,** such that, when viewed from the normal direction of the principal face **213** of the first glass substrate **210,** each scanning line driving element **270** has a rectangular shape having two longer sides **271, 272** and two shorter sides **273, 274.** Moreover, the ratio between the shorter sides **273, 274** and the longer sides **271, 272** is substantially similar to that of the signal line driving elements **260.** Note that, in strict manner, the ratio of the shorter sides and the longer sides may be different between the signal line driving elements **260** and the scanning line driving elements **270.**

Input bumps **266** and output bumps **267** shown in FIG. **3** are provided on a face of the signal line driving element **260** that opposes the principal face **213** of the first glass substrate **210** (see FIG. **1(a)** and FIG. **1(c)****),** and an integrated circuit **268** shown in FIG. **3** is incorporated inside the signal line driving element **260.** Note that, as will be understood from FIG. **1(c)** and FIG. **3****,** the input bumps **266** are disposed on the input substrate side so as to be connected to the input substrate lines **252** of the first glass substrate **210,** whereas the output bumps **267** are disposed on the displaying region side so as to be connected to the output substrate lines **254** of the first glass substrate **210.** In the signal line driving element **260,** the number of output bumps **267** is greater than the number of input bumps **266.** While FIG. **3** schematically shows the input bumps **266** and output bumps **267** provided on the signal line driving element **260,** there may be 42 input bumps **266** and **480** output bumps **267,** for example. Moreover, the interval between adjoining output bumps **267** is 36 µm.

FIG. **1(c)** is referred to again. A plurality of substrate lines **250** are provided in the terminal region **212** of the first glass substrate **210.** The plurality of substrate lines **250** include: input substrate lines **252,** which electrically connect terminals **281** of the input substrate **280** and the signal line driving elements **260;** output substrate lines **254,** which electrically connect the signal lines **230** and the signal line driving elements **260;** input substrate lines **256,** which electrically connect the terminals **281** of the input substrate **280** and the scanning line driving elements **270;** and output substrate lines **258,** which electrically connect the scanning lines **240** and the scanning line driving elements **270.** In the following descriptions of the present specification, the input substrate lines **252** will be referred to as first input substrate lines; the output substrate lines **254** will be referred to as first output substrate lines; the input substrate lines **256** will be referred to as second input substrate lines; and the output substrate lines **258** will be referred to as second output substrate lines. Note that adjoining substrate lines **250** are disposed apart by a predetermined distance (e.g. about 31 µm), so as to electrically insulated from each other.

Note that, although the first input substrate lines **252** and the first output substrate lines **254** are provided for each signal line driving element **260,** FIG. **1(c)** only shows those corresponding to the signal line driving elements **260** that are provided at both ends of a row of signal line driving elements **260,** in order to prevent the figure from becoming too complicated. Similarly, although the terminals **281** of the input substrate **280** are provided so as to be electrically connected to the respective first input substrate lines for each signal line driving element **260,** FIG. **1(c)** only shows those corresponding to the signal line driving element **260** at the left end, in order to prevent the figure from becoming too complicated.

Input signals are input from the terminals **281** of the input substrate **280** to the signal line driving elements **260** and the scanning line driving elements **270,** respectively via the first input substrate lines **252** and the second input substrate lines **256** provided in the terminal region **212** of the first glass substrate **210.** An integrated circuit (see FIG. **3****;** not shown in FIG. **1(c)**) is incorporated in each of the signal line driving elements **260** and the scanning line driving elements **270.** Each integrated circuit performs a predetermined process based on an input signal to generate a data signal and a gate signal, and they supply the data signals and the gate signals to the signal lines **230** and the scanning lines **240** respectively via the first output substrate lines **254** and the second output substrate lines **258.**

Moreover, as shown in FIG. **1(c)****,** in each of the plurality of signal line driving elements **260,** the first output substrate lines **254** are provided so as to be closer to the displaying region than are the first input substrate lines **252.** FIG. **1(c)** shows a region **R1** that accommodates signal lines **230** to which a data signal is supplied from a single signal line driving element **260.** Each signal line driving element **260** is disposed near the center of a shorter side of the region **R1**, such that the first input substrate lines **252** and the first output substrate lines **254** are disposed axisymmetrically with respect to the signal line driving element **260.** The first input substrate lines **252** and the first output substrate lines **254** have parallel portions which extend in parallel to the longer sides **261, 262** of the signal line driving elements **260,** and the parallel portions of the first input substrate lines **252** are disposed closer to the input substrate than are the parallel portions of the first output substrate lines **254,** in a coinciding arrangement with them with respect to the lateral width of the first glass substrate **210.**

Moreover, since the display device **100** of the present embodiment has a curved shape, it is possible to suppress reflection glare as mentioned above. Moreover, the display device **100** of the present embodiment has the following advantages in addition to suppression of reflection glare.

Since the display device has a curved shape, the display device has an improved design freedom, thus further broadening the range of applications for the display device. For example, the display device **100** is suitably used as a display device for an instrument panel to be incorporated in an automotive vehicle. As used herein, an "automotive vehicle" broadly refers to any vehicle or machine which is capable of self propulsion and used for passenger or article transportation or moving of objects, without being limited to so-called automobiles. Specifically, an instrument panel of an automobile may carry various instruments such as a speedometer. In the place of such instruments, a display device having a curved shape can be used. In recent years, there is a tendency that automobiles having a curvy structure are preferred. By using a curved liquid crystal display device as an instrument panel, it becomes possible to produce an automobile which satisfies the preferences of users.

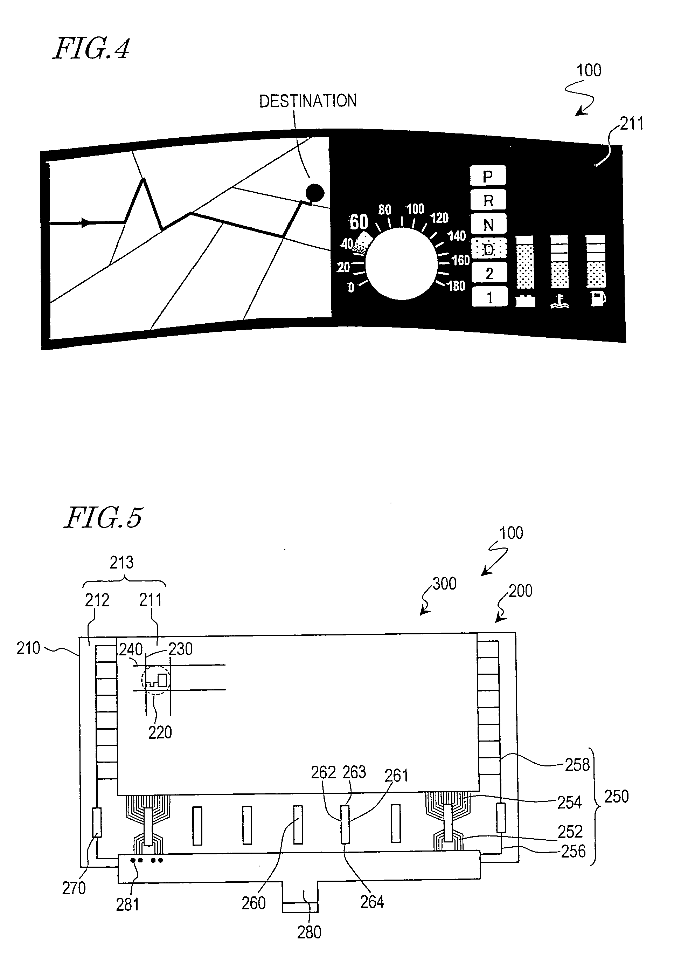

FIG. **4** shows an example where the display device **100** of the present embodiment is used for an instrument panel of a four-wheeled automobile. FIG. **4** shows an example where the velocity, shift lever position, remaining battery power, water temperature, and remaining fuel amount of the automotive vehicle are displayed on the right-hand side of a displaying region **211,** whereas car navigation information is displayed on the left-hand side of the displaying region **211.** The car navigation information is information of a current location or a route to a destination for a driver during travel.

In addition to improvements in design freedom, since the display device **100** has a curved shape, differences in distances from the viewer to the central portion and peripheral portions on the display surface can be reduced, whereby an enhanced display realism is provided.

Moreover, a curved glass substrate can be produced by known methods as described below. For example, a glass substrate may be sandwiched by acrylic plates having a curved-surface shape, and a pressure may be applied so as to compress the two acrylic substrates, whereby a curved glass substrate can be produced. Alternatively, a glass substrate may be secured to an acrylic plate having a curved-surface shape, whereby a curved glass substrate can be produced.

Alternatively, the glass substrate may be curved by press forming. Specifically, after overlaying a second glass substrate on a first glass substrate, at a high temperature, they may be pressed with a concave shaping die and a convex shaping die having a predetermined radius of curvature, thus performing a press forming. Alternatively, after overlaying a second glass substrate on a first glass substrate, a self-weight forming may be performed at a high temperature, followed by a press forming.

The first glass substrate **210** may be curved after mounting the signal line driving elements **260** and scanning line driving elements **270** on the first glass substrate **210** having a planar shape, or, the signal line driving elements **260** and scanning line driving elements **270** may be mounted after curving the first glass substrate **210.** However, mounting can be performed more easily by curving the first glass substrate **210** after mounting the signal line driving elements **260** and scanning line driving elements **270.**

In the display device **100** shown in FIG. **1(c)**, the scanning line driving elements **270** are disposed so that the longer sides **272** oppose the displaying region **211;** however, the present invention is not limited thereto. As shown in FIG. 5, the scanning line driving elements **270** may be disposed in the same row as the signal line driving elements **260.** As a result, the lateral width of the first glass substrate **210,** i.e., the lateral width of the active matrix substrate **200,** can be reduced.

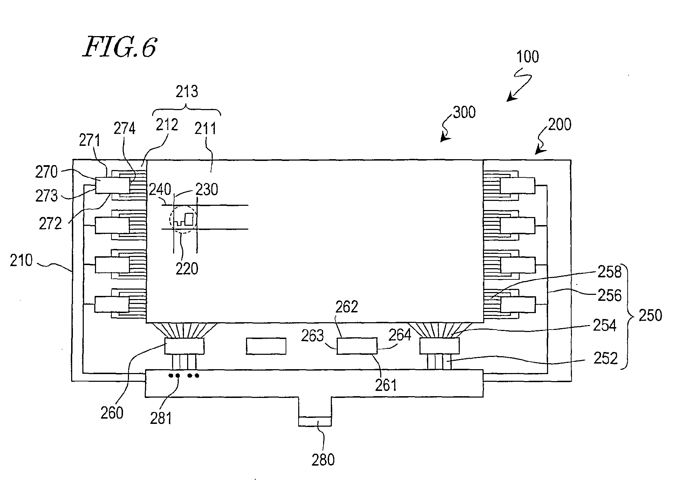

In the above description, the first and second glass substrates **210** and **310** are curved in the lateral direction, and the scanning line driving elements **260** and the signal line driving elements **270** are vertically positioned; however, the present invention is not limited thereto. As shown in FIG. **6****,** the scanning line driving elements **260** and the signal line driving elements **270** may be laterally positioned on first and second glass substrates **210** and **310** which are curved in the vertical direction. Thus, on the first glass substrate **210,** which is curved with respect to a bending axis parallel to the scanning lines **240** in a direction that the signal lines **230** extend, i.e., the vertical direction, the longer sides **261, 262** of the signal line driving elements **260** and the longer sides **271, 272** of the scanning line driving elements **270** are disposed parallel to the direction that the scanning lines **240** extend; as a result, the signal line driving elements **260** and the scanning line driving elements **270** are both unlikely to be detached from the first glass substrate **210,** and the electrical connection of the signal line driving elements **260** and the scanning line driving elements **270** is ensured.

In the above description, the signal line driving elements **260** and the scanning line driving elements **270** are mounted on the first glass substrate **210** via an anisotropic electrically-conductive layer (not shown); however, the present invention is not limited thereto. The signal line driving elements **260** and the scanning line driving elements **270** may be mounted via solder.

In the display device **100** shown in FIG. **1(c)****,** the plurality of signal line driving elements **260** and scanning line driving elements **270** are mounted on the first glass substrate **210;** however, the present invention is not limited thereto. There may be one signal line driving element **260** and one scanning line driving element **270.**

In the above description, an instrument panel of an automotive vehicle is illustrated as an application of a display device having a curved shape; however, the present invention is not limited thereto. For example, a circuit for receiving a television broadcast may be provided for a display device having a curved shape, and this display device may be utilized in a large-size television set. In this case, too, reflection glare of external light will be suppressed, and the viewer will feel surrounded by the concave-shaped display surface, thus being able to view a realistic video.

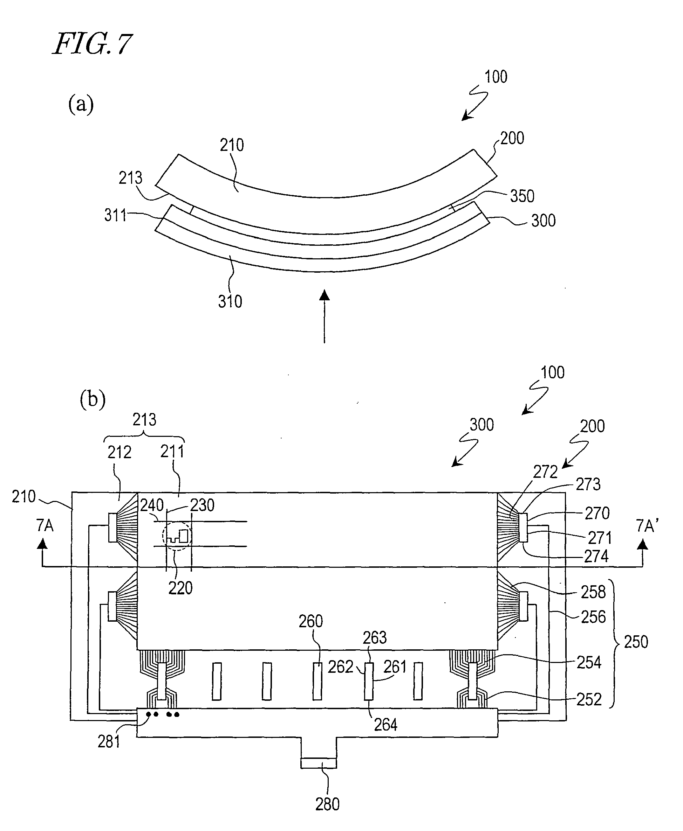

In the above description, the display surface is curved in a concave shape toward the viewer; however, the present invention is not limited thereto. As shown in FIG. **7(a)****,** the display surface may be curved in the lateral direction, so as to present a convex shape toward the viewer. In this display device **100,** as shown in FIG. **7(a)****,** the principal face **213** of the first glass substrate **210** is curved in a convex shape; the principal face **311** of the second glass substrate **310** is curved in a concave shape; and as shown in FIG. **7(b)****,** the signal line driving elements **260** are vertically positioned.

In the above description, the display device is a liquid crystal display device; however, the present invention is not limited thereto. The display device may be any arbitrary display device, such as an organic EL display device, a plasma display device, or an SED display device. In the case where the display device is an organic EL display device, the display device does not need to include a counter substrate, but a display medium layer (i.e., an organic EL layer) may be disposed on a principal face of an active matrix substrate.

### INDUSTRIAL APPLICABILITY

According to the present invention, a display device which is suitably used for an instrument panel can be provided. This instrument panel is suitably used for various types of automotive vehicles, e.g., a car, a motorbike, a bus, a truck, a tractor, an airplane, a motor boat, a vehicle for civil engineering use, a train, or the like. Moreover, according to the present invention, a display device which is capable of displaying a realistic video can be provided.

## Claims

1. A display device comprising an active matrix substrate and a display medium layer disposed on a principal face of the active matrix substrate, wherein,
the active matrix substrate includes:
a glass substrate having a principal face which includes a displaying region and a terminal region,
a plurality of circuit elements provided in the displaying region of the glass substrate,
a plurality of signal lines and a plurality of scanning lines connected to the plurality of circuit elements,
at least one signal line driving element mounted in the terminal region of the glass substrate for supplying a data signal to the plurality of signal lines, and
at least one scanning line driving element mounted in the terminal region of the glass substrate for supplying a gate signal to the plurality of scanning lines;
the glass substrate is curved; and
when the at least one signal line driving element and the at least one scanning line driving element are each viewed from a normal direction of the principal face of the glass substrate, the at least one signal line driving element and the at least one scanning line driving element each have a rectangular shape with two longer sides and two shorter sides, the at least one signal line driving element and the at least one scanning line driving element each being mounted so that the longer sides thereof are parallel to one another.

2. The display device of claim 1, wherein the glass substrate is curved in a direction which is perpendicular to each longer side of the at least one signal line driving element.

3. The display device of claim 1 or 2, wherein the longer sides of the at least one signal line driving element are parallel or perpendicular to a direction in which the plurality of signal lines extend.

4. The display device of any of claims 1 to 3, wherein the principal face of the glass substrate is curved in a concave shape.

5. The display device of any of claims 1 to 3, wherein the principal face of the glass substrate is curved in a convex shape.

6. The display device of any of claims 1 to 5, wherein the at least one signal line driving element and the at least one scanning line driving element are each mounted via an anisotropic electrically-conductive layer.

7. The display device of any of claims 1 to 6, wherein,
the active matrix substrate further includes a plurality of substrate lines provided in the terminal region of the glass substrate;
input bumps and output bumps are provided on the at least one signal line driving element; and
the plurality of substrate lines include a plurality of input substrate lines electrically connected to the input bumps of the at least one signal line driving element and a plurality of output substrate lines electrically connected to the plurality of signal lines and the output bumps of the at least one signal line driving element, the output substrate line or lines corresponding to the at least one signal line driving element being disposed so as to be closer to the displaying region than are the input substrate lines.

8. The display device of any of claims 1 to 7, further comprising a counter substrate opposing the active matrix substrate via the display medium layer, wherein,
the display medium layer is a liquid crystal layer.

9. The display device of any of claims 1 to 8, further comprising a circuit for receiving a television broadcast.

10. An automotive vehicle wherein the display device of any of claims 1 to 9 is used as an instrument panel.
